# EUROPEAN PATENT APPLICATION

(11) **EP 3 263 892 A1**
(43) Date of publication of application: **03.01.2018**
(21) Application number: 16177526.7
(22) Date of filing: 01.07.2016
(51) Int. Cl.: F03D 80/00, F03D 17/00

(54) **WIND TURBINE WITH WIND SENSOR**

(71) Applicant: Siemens Aktiengesellschaft, 80333 München (DE)
(72) Inventor: Vad, Claus, 7400 Herning (DK)

(57) **Abstract**

There is described a wind turbine (100) comprising a rotor (110), a nacelle (120), a generator, and a wind sensor (140, 142, 144), wherein the wind sensor is arranged above a part (130) of the generator that extends between the rotor (110) and the nacelle (120). Furthermore, a wind farm comprising a plurality of interconnected wind turbines (100) is described. Yet further, a method of assembling or modifying a wind turbine (100) is described.

## Description

### Field of Invention

The present invention relates to the field of electrical energy producing devices, in particular to wind turbines. More specifically, the present invention relates to a wind turbine comprising a rotor, a nacelle, a generator, and a wind sensor. Furthermore, the present invention relates to a wind farm comprising a plurality of wind turbines. Yet further, the present invention relates a method of assembling or modifying a wind turbine.

### Art Background

Wind speed and wind direction are important parameters for operating a wind turbine. The wind speed is e.g. used to set the load and/or blade angle (pitch) for a wind turbine during operation and the wind direction is used to adjust the direction of the wind turbine relative to the wind (yaw angle).

Traditionally, the wind parameter values are obtained by means of a wind sensor unit arranged on top of the nacelle as far away from the rotor as possible (i.e. at the rear end of the nacelle) in order to minimize measurement disturbance caused by the rotating rotor blades. To further minimize the measurement disturbance, a filtering of the measurement data may be applied as described in EP 2 515 122 A1.

However, recent research has revealed that the vortices from the rotor blades, in particular from the root segments of the rotor blades, get wider and wider with increasing downstream distance from the rotor. Thus, the wind reaching the wind sensor unit arranged at the rear upper part of the nacelle is in fact turbulent and not undisturbed by the rotor blades at any time, such that even the above mentioned filtering of the measurement data cannot remove the blade disturbance. Therefore, the obtained values of wind speed and wind direction are in fact not accurate.

Accordingly, there may be a need for a way of obtaining accurate wind parameter values.

### Summary of the Invention

This need may be met by the subject matter according to the independent claims. Advantageous embodiments of the present invention are set forth in the dependent claims.

According to a first aspect of the invention there is provided a wind turbine comprising a rotor, a nacelle, a generator, and a wind sensor, wherein the wind sensor is arranged above a part of the generator that extends between the rotor and the nacelle.

This aspect of the invention is based on the general idea that the wind sensor is arranged at a position close to the rotor. This is achieved by arranging the wind sensor above a part of the generator that extends between the rotor and the nacelle, i.e. above a rotating part connected to the rotor. Thereby, the wind sensor is positioned close to the rotor. In this position, the disturbances from the blades will be very significant as the blades pass by and much less significant between the blade passes.

According to an embodiment of the invention, the wind turbine is a direct drive wind turbine.

In other words, the part of the generator extending between the nacelle and the rotor is a tubular part holding magnets, preferably permanent magnets, on its inner wall, such that the magnets rotate with the rotor and thereby induce electrical currents in a stator part of the generator.

According to a further embodiment of the invention, the wind turbine further comprises a holding member, wherein the holding member is fastened to the nacelle and holds the wind sensor above the part of the generator that extends between the rotor and the nacelle.

In other words, the holding member is fastened to and supported by the nacelle in such a way that it is capable of holding the wind sensor in a position above the rotating part of the generator that extends between the rotor and the nacelle.

According to a further embodiment of the invention, the holding member is fastened to the nacelle by means of one or more beams, in particular by two, three, four or even more beams.

The at least one beam is preferably made of metal and arranged in such a way that it can maintain the holding member (and the wind sensor arranged thereon) in the desired position relative to the wind turbine during operation.

Preferably, the beams form a tripod. However, the beam(s) may also form a monopod, a duopod, a quadripod or any other multipod.

The holding member may preferably be formed as an elongate piece of metal, e.g. steel, with a fastening mechanism for fastening the wind sensor in a central part of the elongate piece. In the case of one beam (monopod), the single beam may be fastened to a central part of the elongate piece. In the case of two beams (duopod), a first beam may be fastened to one end of the elongate piece and a second beam may be fastened to the other end of the elongate piece. In the case of three beams (tripod), a first beam may be fastened to one end of the elongate piece, a second beam may be fastened to the other end of the elongate piece, and a third beam may be fastened to the central part of the elongate piece, e.g. below the wind sensor.

According to a further embodiment of the invention, the wind sensor is adapted to output a sensor data signal indicative of at least one parameter selected from the group of wind speed and wind direction.

In other words, the wind sensor is capable of measuring wind speed and/or wind direction.

The wind sensor may in particular be an anemometer comprising one or more ultrasonic transducers.

According to a further embodiment of the invention, the wind turbine further comprises an analysis unit adapted to analyze a sensor data signal received from the wind sensor.

The analysis unit comprises a data processing unit and a memory unit as needed for analyzing the stream of sensor data received during operation. The analysis unit may be a separate dedicated hardware unit or it may be implemented as a software component within the control system of the wind turbine. The sensor data signal preferably comprises digital data, whereby the conversion from analog to digital data may take place within the wind sensor, within the analysis unit or within a separate converting unit.

The analysis unit preferably outputs relevant parameter values, such as values for wind speed and wind direction, obtained by analyzing the sensor data signal from the wind sensor over a predetermined period of time.

According to a further embodiment of the invention, the analysis unit is adapted to apply an adaptive filtering algorithm to the sensor data signal in order to reduce influence of rotor blade disturbance.

More specifically, the adaptive filtering algorithm may be used to detect changes in the sensor signal caused by blade disturbance and to filter out the corresponding parts of the sensor signal.

According to a further embodiment of the invention, the wind turbine comprises at least one further wind sensor arranged above the part of the generator that extends between the rotor and the nacelle and at a predetermined distance from the wind sensor.

By having two (or even more) spatially distributed wind sensors, an even more accurate filtering of the respective sensor data may be obtained, e.g. by taking correlation of the sensor signals into consideration.

According to a second aspect of the invention, there is provided a wind farm comprising a plurality of interconnected wind turbines according to the first aspect or any of the above embodiments thereof.

According to this aspect of the invention, each wind turbine in the wind farm is capable of accurately measuring local wind parameters, such as wind speed and wind direction. In sum, the wind farm according to this aspect is therefore capable of operating very efficiently.

According to a third aspect of the invention, there is provided a method of assembling or modifying a wind turbine, in particular a direct drive wind turbine. The method comprises (a) providing a wind turbine comprising a rotor, a nacelle, and a generator, and (b) arranging a wind sensor above a part of the generator that extends between the rotor and the nacelle.

This aspect of the invention is essentially based on the same idea as the first aspect and the corresponding embodiments described above. More specifically, the method according to the third aspect of the invention allows assembly of a new wind turbine corresponding to the first aspect. Furthermore, the method according to the third aspect also alternatively allows for modification of an existing wind turbine into a wind turbine corresponding to the first aspect.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a wind turbine according an embodiment of the present invention.
Figure 2 shows a detailed front view of the wind turbine shown in Figure 1.
Figure 3 shows a detailed side view of the wind turbine shown in Figure 1.
Figure 4 shows a detailed upper view of the wind turbine shown in Figure 1.
Figure 5 shows a holding member according to an embodiment of the present invention.

### Detailed Description

The illustration in the drawing is schematic. It is noted that in different figures, similar or identical elements are provided with the same reference numerals or with reference numerals which differ only within the first digit.

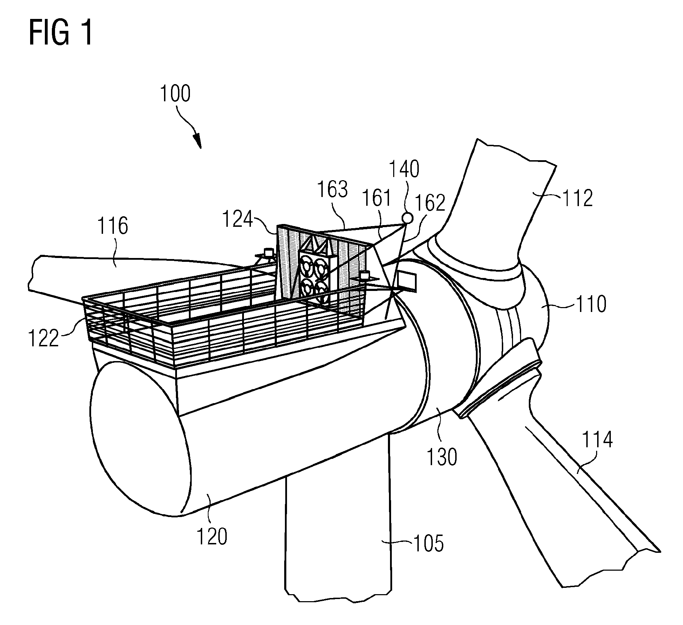

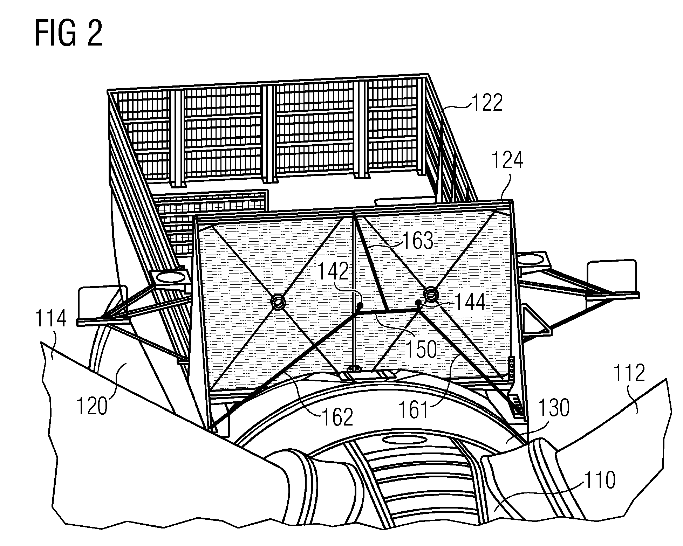

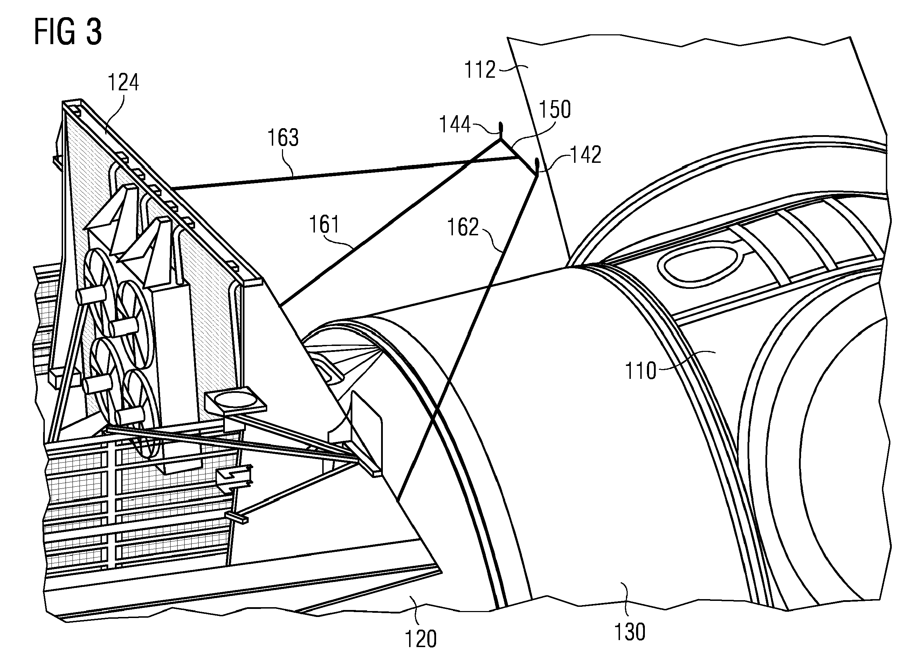

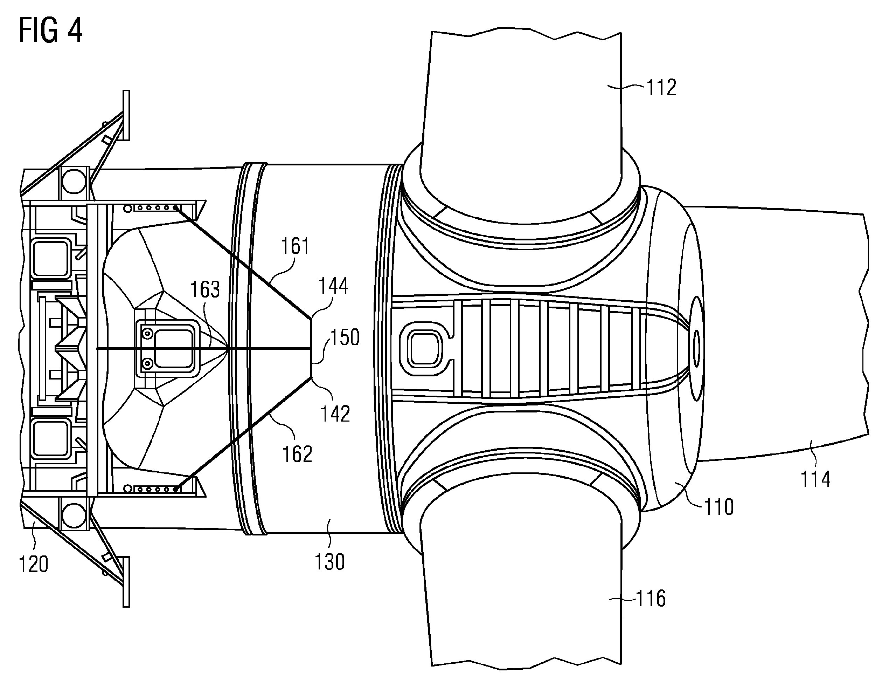

Figure 1 shows a wind turbine 100 according an embodiment of the present invention. More specifically, the wind turbine 100 comprises a tower 105 holding a rotor 110, nacelle 120, rotating generator part 130, and a wind sensor 140. The rotor or hub 110 comprises rotor blades 112, 114 and 116. On top of the nacelle 120, a platform 122 and a cooling device 124 are arranged as known in the art of direct drive wind turbines. The rotating generator part 130 is arranged between the rotor 110 and the nacelle 120 and is constituted by a tubular member equipped with magnets on its inside wall. The wind sensor 140 is held by a holding member (not shown, see Figures 2 to 5). The holding member is fastened to the nacelle 120 by beams 161, 162 and 163 in such a way that the wind sensor 140 is held in a position above the rotating generator part 130 between the nacelle 120 and the rotor 110, i.e. just behind the rotor 110.

Figures 2 to 4 respectively show a detailed front view, a detailed side view and a detailed upper view of the wind turbine shown 100 in Figure 1. As schematically shown in Figures 2 to 4, an elongate holding member 150 for holding the wind sensor 140, here exemplified by sensor devices 142 and 144, is held in position above the rotating generator part 130 by beams 161, 162 and 163. The beams 161 and 162 extend from respective ends of the elongate holding member 150 to positions towards the respective sides on the upper part of the nacelle 120. The beam 163 extends between a central part of the elongate holding member 150 and a central part of an upper edge portion of the cooling device 124 of the nacelle 120. Thereby, the beams 161, 162 and 163 form a tripod supporting the holding member in the position above the rotating generator part 130 close to the rotor 110.

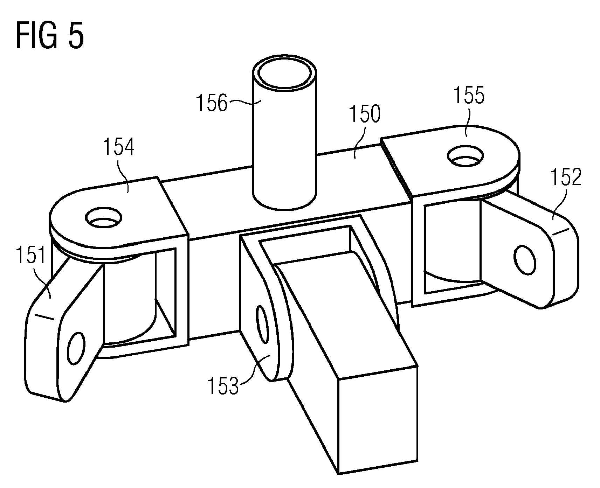

Figure 5 shows a holding member 150 according to an embodiment of the present invention, including the embodiment discussed above in conjunction with Figures 1 to 4. More specifically, the holding member 150 is made of metal and formed as an elongate (i.e. bar-shaped) member having a substantially rectangular cross-section. The elongate holding member 150 comprises end portions 154 and 155 respectively equipped with connecting elements 151 and 152 for connecting with beams 161 and 162 (see Figures 1 to 4). The holding member 150 further comprises a central connecting element 153 for connecting with beam 163 (see Figures 1 to 4). Furthermore, the holding member 150 comprises a connecting element 156 formed as a stub, i.e. a short tubular piece, for receiving a wind sensor unit (not shown).

In operation of the wind turbine 100 shown entirely in Figure 1 and partially in Figures 2 to 5, the wind sensor(s) 140, 142, 144 are positioned above the rotating generator part 120, i.e. just behind the rotor blades 112, 114, 116. Accordingly, the rotating blades 112, 114, 116 will impact the sensor output signals due to a shadowing effect. The parts (i.e. time segments) of the sensor output signals that are affected by the shadowing effect are preferably identified and disregarded by applying an adaptive filtering algorithm and optimized weighting to the sensor output data, for example as described by Torben Nielsen in "Tracking of Blade Disturbance by Adaptive Filtering and Optimized Weighting of Wind Measurements" (available at http://dx.doi.org/10.18169/PAPDEOTT004946). Thereby, the parts of the sensor signal which are representative of the actual parameter value, such as wind speed or wind direction, and not distorted by blade disturbances are extracted, such that reliable and accurate parameter values can be obtained.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A wind turbine (100) comprising a rotor (110), a nacelle (120), a generator, and a wind sensor (140, 142, 144), wherein the wind sensor is arranged above a part (130) of the generator that extends between the rotor (110) and the nacelle (120).

2. The wind turbine according to the preceding claim, wherein the wind turbine is a direct drive wind turbine.

3. The wind turbine according to any of the preceding claims, further comprising a holding member (150), wherein the holding member is fastened to the nacelle (120) and holds the wind sensor (140, 142, 144) above the part (130) of the generator that extends between the rotor (110) and the nacelle (120).

4. The wind turbine according to the preceding claim, wherein the holding member (150) is fastened to the nacelle (120) by means of one or more beams (161, 162, 163).

5. The wind turbine according to any of the preceding claims, wherein the wind sensor (140, 142, 144) is adapted to output a sensor data signal indicative of at least one parameter selected from the group of wind speed and wind direction.

6. The wind turbine according to any of the preceding claims, further comprising an analysis unit adapted to analyze a sensor data signal received from the wind sensor (140, 142, 144).

7. The wind turbine according to the preceding claim, wherein the analysis unit is adapted to apply an adaptive filtering algorithm to the sensor data signal in order to reduce influence of rotor blade disturbance.

8. The wind turbine according to any of the preceding claims, further comprising at least one further wind sensor (140, 142, 144) arranged above the part (130) of the generator that extends between the rotor (110) and the nacelle (120) and at a predetermined distance from the wind sensor (140, 142, 144).

9. A wind farm comprising a plurality of interconnected wind turbines (100) according to any of the preceding claims.

10. A method of assembling or modifying a wind turbine, in particular a direct drive wind turbine, the method comprising:
providing a wind turbine (100) comprising a rotor (110), a nacelle (120), and a generator, and
arranging a wind sensor (140, 142, 144) above a part (130) of the generator that extends between the rotor (110) and the nacelle (120).
